# EUROPEAN PATENT APPLICATION

(11) **EP 2 222 002 A2**
(43) Date of publication of application: **25.08.2010**
(21) Application number: 10153470.9
(22) Date of filing: 12.02.2010
(51) Int. Cl.: H04H 60/31, H04N 7/16

(54) **Viewer presence detection**

(30) Priority: 24.02.2009 EP 09153511
(71) Applicant: Irdeto Access B.V., 2132 HD Hoofddorp (NL)
(72) Inventor: Biemans, Michael Dennis, 5611 XA Eindhoven (NL)
(74) Representative: van Looijengoed, Ferry Antoin Theodorus

(57) **Abstract**

One embodiment of the present invention sets forth a method for determining a chance that a user is present at a current time while a client device is tuned to a channel by monitoring a user input to the client device and determining a time when the user provides the user input. At the time when the user provides the user input, the chance is assigned an initial value. After that, the chance varies over time according to a first function. The chance that the user is present at the current time is then determined using the initial value and the first function. As a result, a chance of a user being present while a client device plays out media segments may be determined without incurring the costs of providing additional hardware and without requiring the user to register and unregister.

## Description

### BACKGROUND OF THE INVENTION

### Field of the Invention

Embodiments of the present invention relate generally to viewer ratings and targeted advertising and, more specifically, to determining a chance of a viewer being present while a client device plays out advertisements.

### Description of the Related Art

To accurately determine who is watching TV programs and ads is a challenge that exists both for viewer ratings and (targeted) advertising. The total number of viewers and their demographics form the information external parties such as broadcasters and advertisers are interested in.

The value of an ad campaign to an advertiser is determined by the number of people who saw the ad, and by how many times they saw it. If a set top box (STB) is always turned on, it does not necessarily mean that an ad has actually been seen.

Accurately counting views is important for generating reports back to the advertiser. Ads can have metadata indicating that there is an upper limit to the number of times an ad can be shown (e.g. during one day or during the ad's lifetime). A solution that can determine whether someone is watching an ad can also be used to determine whether someone is watching the actual TV content; in this way accurate viewer ratings can be determined.

Currently, viewer ratings (such as Nielsen ratings) are determined only by a small selection of volunteer households. The participating households get a device to register who is watching what. The device later reports back to a central office, over a phone line or over the internet. The same could be done with an interactive application on a digital STB with a return path.

For example, EP 1213860 discloses an audience measurement system that collects data representative of tuned programs that are received via the tuned channels rather than data representative of the tuned channels. The audience measurement system includes a household metering apparatus that records ancillary codes or extracts program signatures from the programs if no ancillary codes are found therein. The system also includes a reference apparatus that monitors broadcast programs, extracts reference signatures from the programs, records whatever ancillary codes may be associated with these broadcast programs and, if no ancillary codes are present, compresses and stores a digital replica representative of the broadcast programs monitored. The system further compares the household and reference data to determine which of the broadcast programs were selected for viewing and/or listening, which of the metered households selected the broadcast programs, and at which times the broadcast programs were selected.

One drawback of the existing rating approaches is that they require the viewer to register and unregister, which would be disruptive to normal TV viewing. If every viewer had to do this for advertising purposes (as opposed to a selection of volunteers), it would meet massive resistance. Another drawback is that, in most cases, additional hardware is needed, which would be cost prohibitive if every household would need such a device.

US 2005/120366 discloses a method of determining whether a viewer has watched a program. The method includes the steps of accumulating program flipping data for the program, determining metadata for the program, selecting an algorithm dependent on the metadata, and applying, in the selected algorithm to the program flipping data, to thereby extract intentional viewing data that establishes if the program has been watched by the viewer.

EP 1 646 169 discloses a method of analysis of the audience for channels selectable by a channel selector device for presentation on a presentation device. The channel selector device provides data indicating which channels are selected and the lengths of time for which selected channels remain selected. The data relating to the lengths of time for which channels remain selected is subject to a capping procedure, whereby the indicated length of time for which a channel remains selected is reduced to a capped maximum permitted length of time if the indicated length of time exceeds the maximum permitted length, to provide capped data. The capped data is employed to select, in dependence upon the indication of the channel selected and length of time for which the channel is selected, an array of probabilities of individuals' exposure (PIVs) to the presentation of the channel on a presentation device, for individuals of different demographies, whereby the data provided by the channel selector device can be resolved into data estimating the likelihood of individuals of different demographies participating in the audience.

As the foregoing illustrates, what is needed in the art is a technique for determining a chance of a viewer being present while a client device plays out media segments that overcomes the drawbacks of conventional approaches.

### SUMMARY OF THE INVENTION

One embodiment of the present invention sets forth a method for determining a chance that a user is present at a current time while a client device is tuned to a channel as recited in claim 1.

Another embodiment of the present invention sets forth a system configured for determining a chance that a user is present at a current time while a client device is tuned to a channel as recited in claim 15. In addition, the system may comprise further means configured for performing the methods of claims 2-13, implemented either in hardware or software.

One embodiment of the present invention sets forth a method for determining a chance that a user is present at a current time while a client device is tuned to a channel by monitoring a user input to the client device and determining a time when the user provides the user input. At the time when the user provides the user input, the chance is assigned an initial value. After that, the chance varies over time according to a first function. The chance that the user is present at the current time is then determined using the initial value and the first function. As a result, a chance of a user being present while a client device plays out media segments may be determined without incurring the costs of providing additional hardware and without requiring the user to register and unregister.

The client device may e.g. comprise a STB or a television (TV) set. In various embodiments, the step of monitoring a series of user inputs is performed at a client device, while the steps of determining an input time, assigning an initial value to the chance associated with the input time, and determining the chance that a user is present at the current time may be performed either at the client device or at a central office. Consequently, the corresponding means for performing these steps (i.e., the detector, the determination module, the assignor, and the processor) may be included within the client device or may be external to the client device. For example, if the steps of monitoring a series of user inputs and determining an input time are performed at a client device, but the steps of assigning an initial value to the chance at the input time, and determining the chance that a user is present at the current time are performed at a central office, then the detector and the determination module are included within the client device, while the assignor and the processor are included within the central office.

In some embodiments, the user input or series of user inputs may be recorded (or logged) in addition to being monitored. In such embodiments, the time-dependent function used to determine the chance that the user is present at a current time may depend on user input(s) previously provided by the user.

Embodiments of the invention may either involve a single user input or a series of user input. In fact, in order to simplify the descriptions following below, some embodiments are described in relation to monitoring "a user input."
However, according to the embodiments of the present invention, such a user input may comprise a series of user inputs.

The gist of the present invention resides in monitoring user input to determine whether a user is present while a client device is tuned to a channel. The user is present at the time of the input, while the chance that he is still present in the future becomes lower over time. The monitoring of user input may be performed without using additional hardware and without requiring the user to register and unregister, thus providing significant advantages over prior art approaches.

The embodiment of claim 2 defines the use of the computed chance to determine whether the chance satisfies a threshold condition. The threshold condition may comprise, for example, the chance being greater than a particular threshold value (claim 7). Such a determination allows making conclusions regarding user's presence and, based on these conclusions, performing appropriate actions. For example, according to the embodiment of claim 3, the determination of whether the computed chance satisfies the threshold condition allows establishing whether or not the user is present while the client device is tuned to the channel. If the chance drops below the threshold value, media segments that are played out on or via the client device are no longer marked as being viewed or listened to, even if the user is actually still present. In such a case, according to the embodiment of claim 4, the client device may employ methods for encouraging the user to provide user input. In various embodiments, the user may be triggered to provide user input by, for example, adjusting the output volume of the audio on the client device (which would lead the user to press the volume button), displaying a pop-up banner (which would lead the user to press a button to close the banner), starting an interactive application (which would lead the user to reply or close the application), changing the channel (which would lead the user to change the channel back), or displaying a screen announcing that the client device will be put in a power save mode if the user does not respond within a certain time (which would lead the user to respond).

It is possible, however, that the user wants to record a media segment on an (external) recording device. The embodiment of claim 5 provides a method that advantageously allows the user to record the media segment without being triggered to provide user input. The embodiment of claim 6 further defines an option to disable disruptive triggers by marking the media segment with a mark indicating that the media segment is being recorded.

The embodiment of claim 8 advantageously defines the various ways of obtaining the threshold value. For example, the threshold value may be predetermined in the client device as a fixed number for the whole system. Alternatively, the threshold value may be different for each media segment provider (e.g., each advertiser) or even for each media segment. In this case, metadata of the media segment that is received by the client device may contain this value.

The embodiments of claim 9 provide alternative implementations of the steps of determining the chance that the user is present and determining whether the chance satisfies the threshold condition. Performing these steps at predetermined time intervals allows decreasing monitoring and computational burden on the client device, while performing these steps continuously allows for faster response when the chance fails to satisfy the threshold condition.

The embodiment of claim 10 provides further parameters that may be used in determining the chance. Knowing the length of the media segment, the content of the media segment, and/or the statistical data related to the chance allows determining the chance with increased accuracy. In other words, the time dependent function used to determine the chance may be also dependent on additional parameters.

The embodiment of claim 11 defines that one type of user input may comprise the user triggering an external device connected to the client device. Such an external (possibly additional) hardware to which the client device is connected can be used to enhance the solution by receiving additional clues as to the presence of the user. The external hardware may comprise, for example, TV sets, external sensors, people meters, or other electronic devices connected to the client device either with a wire or wirelessly. In other embodiments, user input may comprise the user pressing a button on the client device or on a remote control for the client device.

While in some embodiments a user input may comprise the user actually performing an action (such as, for example, the user pressing a button on a remote control for the client device described above), in other embodiments the user input may comprise the user not performing an action when expected. An example of the latter could be a situation when a user does not provide a user input even though a media segment received via the channel includes an identifier indicating that if the user is present while the client devices is tuned to the channel then the user should provide a user input. The user input comprising such a "non-event" may provide a further indication of absence of the user or may serve as a confirmation that the user belongs to a certain known viewer profile.

The embodiment of claim 12 allows determining and fine tuning the parameters in the algorithm for computing the user presence chance at a current time by transmitting the chance or a derivative thereof to a central office. Further, some client devices may be equipped with an extended application where the user actively has to enter information regarding who is watching/listening and who stopped watching/listening. This information may also be transmitted to the central office.
Based on the information received, the central office can then determine what the average drop-off in chance is for each (type of) media segment and/or what shape the drop-off curve has (linear, exponential, etc). The updated parameters may then distributed to all client devices in the system.

The embodiment of claim 13 provides the boundaries for the chance that a user is present at a current time. For example, the chance may be assigned a 100% value when the user provides any user input that does not lead to the client device being turned off or put in a standby mode. If, however, the user input leads to the client device being turned off or put in a standby mode, the chance is assigned a 0% value. Indeed, in this case the user is present, but obviously will not see/hear any media segments from that moment on.

Embodiment of claim 14 provides a computer program comprising software code portion for implementing the method steps of claims 1-13. Such a computer program may be downloaded to the existing client devices. Alternatively, such a computer program (i.e., an applet) may be sent to the client device from the central office and received by the client device via the channel, along with the media segments.

In the following, media segments that are played out on the client device may be described as programs or advertisements viewed by the user. However, according to the embodiments of the present invention, media segments are not limited to only video programs or advertisements and may comprise any kind of media such as video segments, audio segments, applets, images, messages, etc.

Hereinafter, an embodiment of the invention will be described in further detail. It should be appreciated, however, that this embodiment may not be construed as limiting the scope of protection for the present invention.

### BRIEF DESCRIPTION OF THE DRAWINGS

Figure 1 is a block diagram illustrating a client device configured to implement one or more aspects of the present invention;
Figure 2 is a block diagram illustrating a communication system, according to one embodiment of the present invention;
Figure 3A is a flow diagram of method steps for determining a chance that a user is present, according to one embodiment of the present invention;
Figure 3B is a flow diagram of method steps for establishing whether the user is present, according to one embodiment of the present invention;
Figure 3C is a flow diagram of method steps for establishing whether the user is present, according to another embodiment of the present invention; and
Figures 4A-4C illustrate how the chance that a user is present evolves over time, according to various embodiments of the present invention.

### DETAILED DESCRIPTION

In the following description, numerous specific details are set forth to provide a more thorough understanding of the present invention. However, it will be apparent to one of skill in the art that the present invention may be practiced without one or more of these specific details. In other instances, well-known features have not been described in order to avoid obscuring the present invention.

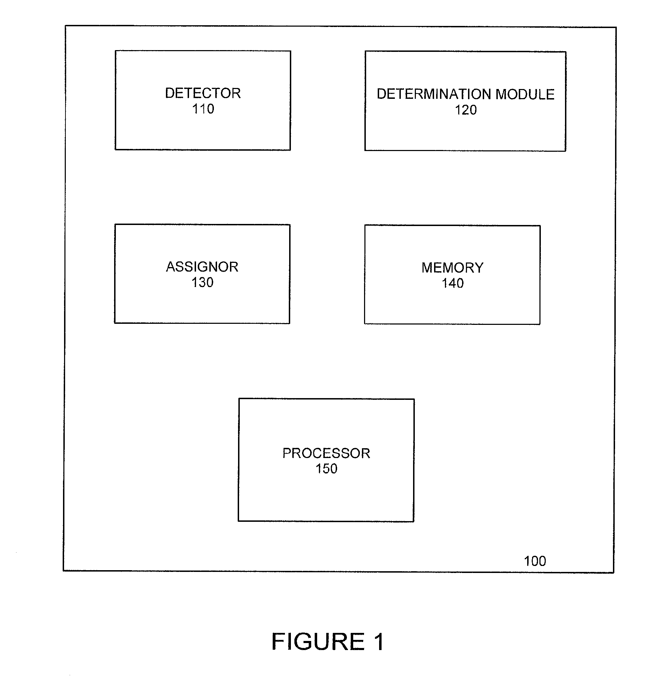

Figure 1 is a block diagram illustrating a client device 100 configured to implement one or more aspects of the present invention. As shown, the client device 100 includes a detector 110, a determination module 120, an assignor 130, a memory 140, and a processor 150. The detector 110 is configured for detecting a user input to the client device 100, for example, from a remote control. The determination module 120 is configured for determining an input time when the user provides the user input. The assignor 130 is connected to the detector 110 and configured for assigning an initial value to a chance that the user is present while the client device 100 is tuned to a channel. The memory 140 is configured for storing a function of time that is later used by the processor 150 to determine the chance that the user is present at a current time.

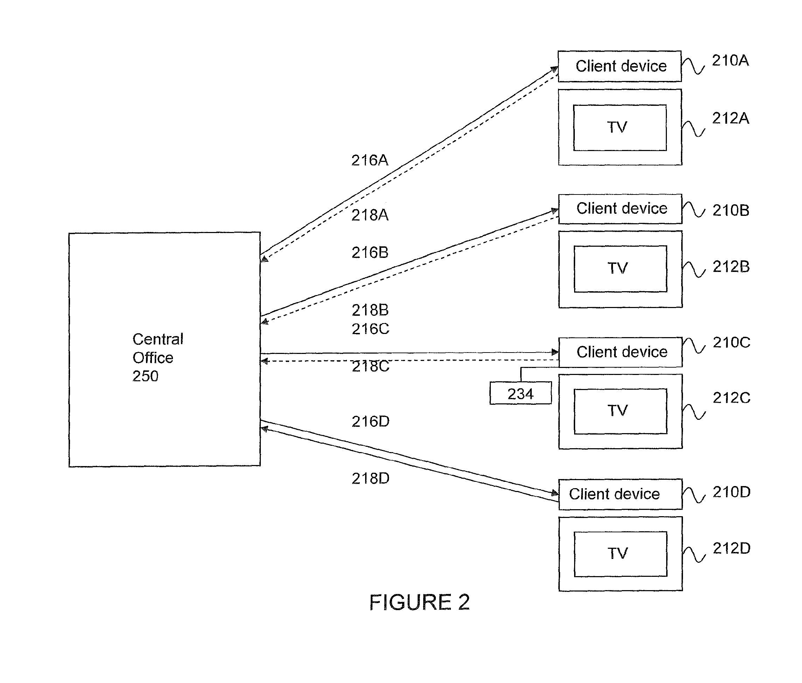

In one embodiment, the client device 100 may comprise a set top box. Each of the detector 110, the determination module 120, and the assignor 130 may be implemented in hardware, in software, or as a hybrid solution having both hardware and software components. Furthermore, they may be implemented within a single logic unit within the processor 150. In other embodiments, the determination module 120, the assignor 130, the memory 140, and the processor 150 may be implemented externally to the client device 100. For example, these elements may be included within a central office 250 described in Figure 2.

Figure 2 is a block diagram illustrating a communication system 200, according to one embodiment of the present invention. As shown, the communication system 200 includes client devices 210A-210D, each of which could be configured as the client device 100 described in Figure 1. Each of the client devices 210A, 210B, 210C and 210D is connected to a TV 212A, 212B, 212C and 212D, respectively, and is configured to receive programs from a central office 250 via a channel 216A, 216B, 216C and 216D, respectively.

Optionally, each of the client devices 210A-210D may be configured to send information to the central office 250 via a channel 218A, 218B, 218C and 218D, respectively. For example, the client device 210D includes an external application where the user actively has to enter who is watching and who stopped watching the program. This information may be fed back, via the channel 218D, to the central office 250 which can then determine what the average drop-off in chance is for each (type of) program and/or what shape the drop-off curve has (e.g., linear, exponential, etc). These parameters may then be distributed to all client devices 210A-D in the system 200 via the channels 216A-D.

Even for the users using a client device without an external application, if there is a return channel present, such as the channels 218A-218D, useful information can be sent back to the central office 250 to determine the parameters mentioned above. For example, the client devices 210A-210D may be configured to send information indicating which programs or which channel the user is watching at the time when the user input is detected and/or at the current time for which the chance is determined. Such information may be obtained using tuner-based techniques, program and/or channel identifiers stored in the signal communicated via the channels 216A-D, or signatures taken from the signal communicated via the channels 216A-216D. Further details regarding obtaining this information may be found in the EP 1213860 described above.

In one embodiment, extra hardware may be employed to more accurately determine the user presence chance. For example, as shown, the client device 212C is connected to external hardware 234. The external hardware 234 may comprise an infrared sensor that plugs into the USB or other port on the client device 212C to detect physical presence of the user. The user might also have an in-home network with devices like media players/ centers that might have information about the user presence. For example, if the user just started to playback a DVD, then there is little chance that the output from the client device 212C is being viewed or listened to. The communication between the client device 212C and the external hardware 234 could also be two-way: the client device 212C could communicate to the external hardware 234 the value of the chance that a user is present.

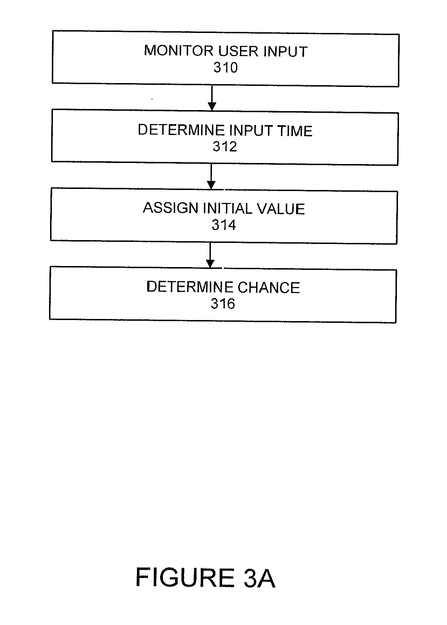

Figures 3A through 3C are flow diagrams of method steps for determining a chance and establishing whether the user is present, according to various embodiments of the present invention. While the method steps are described in conjunction with Figures 1 and 2, persons skilled in the art will recognize that any system configured to perform the method steps, in any order, is within the scope of the present invention.

As shown in Figure 3A, the method begins in step 310, where the detector 110 monitors a series of user inputs to the client device 100. In various embodiments, the user input may comprise a single user input and may comprise a certain action performed by the user, such as, for example, the user pressing a button on the client device 100 or a remote control to the client device 100, or the user triggering an electronic device (e.g., a TV set or an external sensor) connected to the client device 100 either with a wire or wirelessly.

Alternatively, the user input may comprise the user not performing a certain action. For example, a user may avoid providing a user input even though a media segment received via the channel includes an identifier indicating that if the user is present while the client devices is tuned to the channel then the user should provide a user input. The user input comprising such a "non-event" (e.g., the fact that the user did not respond to a particular type of content being provided via the channel) may provide a further indication of absence of the user or may serve as a confirmation that the user belongs to a certain known viewer profile.

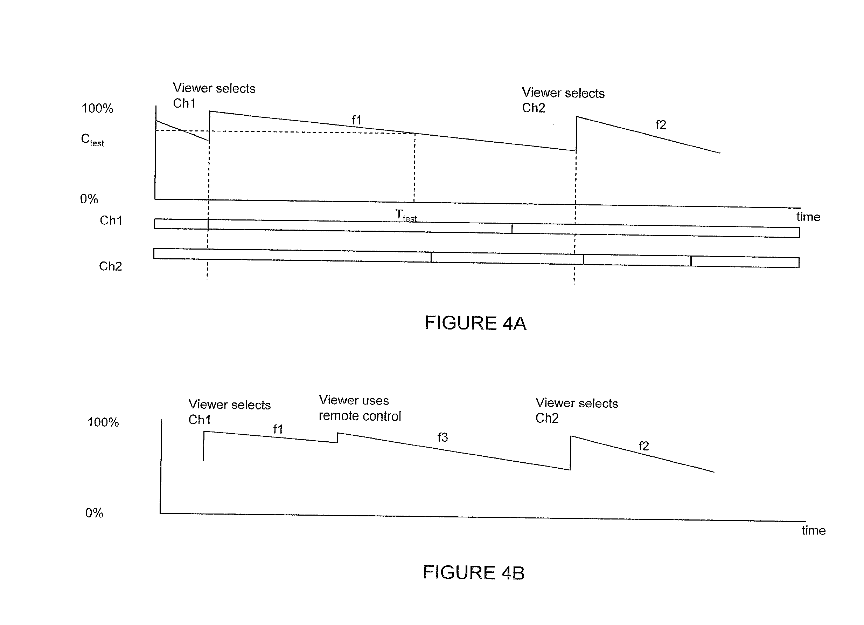

In step 312, the determination module 120 determines an input time when the user provides a user input to the client device. The user input may be the last of a series of user inputs. The input time may, optionally, be stored in the memory 140. The method then proceeds to step 314, where the assignor 130 assigns an initial value to a chance that the user is present at the input time while the client device 100 is tuned to a channel. The initial value assigned may depend on the type of input provided by the user. For example, consider that the user input comprises the user turning the client device 100 off, putting the client device 100 in a stand-by mode, or starting a playback of a DVD. In this case, the initial value may be 0% because the user will not be able to view any programs received via the channel after this. If, however, the user input comprises an input that does not prevent the user from being able to view the programs (for example, increasing the volume on the client device 100), then the initial value may be 100%. As illustrated in Figure 4A, when the user selects to watch channel 1, the chance is assigned to the initial value of 100% because at that time, the user is present. Of course, in other embodiments, the range over which the values of chance vary may be different. Furthermore, the initial value of the chance may be dependent on the earlier user inputs within a series of user inputs. The earlier user inputs may, for example, be stored in the memory 140.

After the user provided the user input, starting from the initial value, the value of chance decreases over time according to a certain function of time. The method ends in step 316, where a program running on the processor 150 determines the chance that a user is present at a current time using the function. For example, as shown in Figure 4A, at time Tₜₑₛₜ, the processor 150 would determine the chance to be equal to Cₜₑₛₜ.

In various embodiments, the function that describes how the chance is varied over time may depend on the type of the user input. For example, as shown in Figure 4A, following the user selecting channel 1, the chance varies over time according to a function f₁, but following the user selecting for viewing channel 2, the chance varies over time according to a function f₂. Further, following the user providing a user input during a program (e.g., the user presses a volume button on the remote control during the program), as shown on Figure 4B, the chance varies over time according to a function f₃. In addition, the function of time may also be dependent on the earlier user inputs within the series of user inputs, stored in the memory 140.

Furthermore, additional parameters may be used in order to determine the chance with greater accuracy. These parameters may include, for example, the length of the media segment, the content of the media segment, and/or the statistical data related to the chance.

Yet in other embodiments, the client device 100 can be trained to know what the "typical" behavior is for a particular user. For example, if a certain program is watched every week (or every day), then there is a high chance the program is viewed from beginning to end. Also, the training could involve monitoring whether the user would normally put the client device 100 in stand-by after watching TV: if this is the case then the chance of the user being present if the box is not in stand-by is increased. The initial value assigned to the chance and/or the time dependent function for determining the chance at the current time may be established based on such information.

Every time when the client device 100 detects user input, the input time is determined and the chance is assigned an initial value, and when the processor 150 determines the chance, it is done based on the input time and the initial value assigned to the chance the last time the client device 100 detected the user input. As illustrated in Figures 4A and 4B, every time the user changes the channel or uses a remote control, the chance is assigned to 100%.

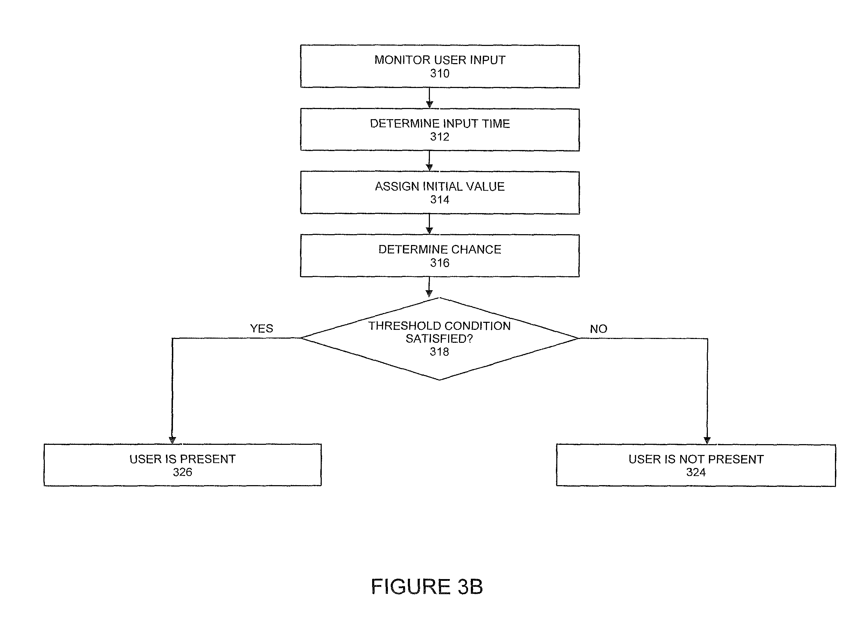

In another embodiment, the method illustrated in Figure 3A does not end in step 316, but proceeds to step 318, illustrated in Figure 3B, where the client device 100 determines whether the chance satisfies a threshold condition. If so, then, in step 326, the client device 100 establishes that the user is present. If, however, in step 318 the the client device 100 determines that the chance does not satisfy the threshold condition, then, in step 324, the client device 100 establishes that the user is not present.

The threshold condition may, for example, comprise the chance being greater than a threshold value. In one embodiment, the threshold value may be predetermined in the client devices 210A-D as a fixed number for the whole system 200. In another embodiment, the threshold value may be different for each media segment provider (e.g., each advertiser) or even for each media segment. In this case, metadata of the media segment that is received by the client devices 210A-210D would contain this value.

Steps 316 and 318 may be performed only at predetermined time intervals, which would decrease monitoring and computational burden on the client device 100. Alternatively, steps 316 and 318 may be performed continuously, which would enable faster response when the chance fails to satisfy the threshold condition.

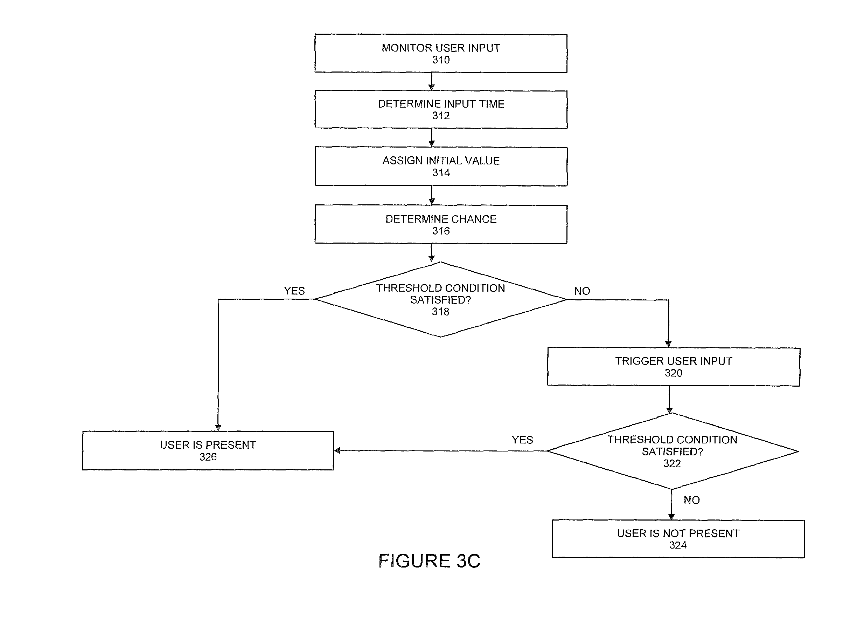

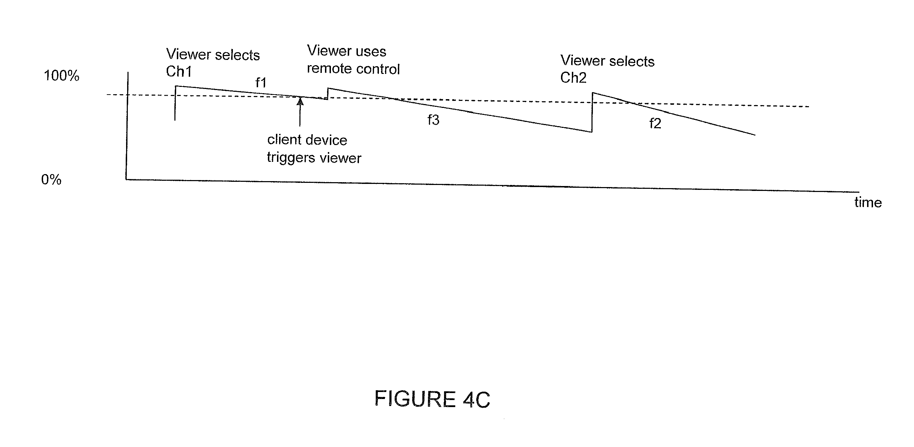

In yet another embodiment, the method illustrated in Figure 3B proceeds differently following step 318, as shown in Figure 3C. If, in step 318, the client device 100 determines that the chance does not satisfy the threshold condition, then, in step 320, the client device 100 triggers the user to provide user input. Figure 4C illustrates such a situation. As shown, when the chance falls below the cut off point, the STB triggers the user to provide an input. For example, the user may be triggered to provide user input by adjusting the output volume of the audio on the client device 100. A good time to do this would be exactly at the start of an advertisement break, where it is normal that the volume is changed. Such triggering would encourage the user to press the volume button on the remote control, as indicated in Figure 4C. Alternatively, triggering may comprise displaying a pop-up banner (which would lead the user to press a button to close the banner), starting an interactive application (which would lead the user to reply or close the application), changing the channel (which would lead the user to change the channel back), or displaying a screen announcing that the client device will be put in a power save mode if the user does not respond within a certain time (which would lead the user to respond).

It is possible, however, that the user wants to record a program on an external VCR, DVD or an external or internal hard disk. Therefore, the present invention provides an option to disable triggering when the user is recording the program. For example, triggering may be disabled by marking the program with a mark indicating that the program is being recorded or going to be recorded.

After step 320, the method proceeds to step 322, where the client device 100 determines again whether the chance satisfies a threshold condition. As described above, every time the user provides user input, the chance is assigned an initial value. Therefore, if, following the triggering in step 320, the user provides user input, then in step 322 the client device 100 will determine that the chance now satisfies the threshold condition. If this is the case, the method then ends in step 326, described above. If, however, in step 322, the client device 100 determines that the chance still does not satisfy the threshold condition, then the method ends in step 324, described above.

One advantage of the present invention is that a chance of a user being present while a client device is tuned to a channel communicating media segments may be determined without incurring the costs of providing additional hardware and without requiring the user to register and unregister. Embodiments of the present invention may be used in systems where targeted advertising is used. The same methods can also be used to more accurately determine viewer numbers for content other than advertising as well. In addition, for environmental reasons, the viewer presence detection can be used to power down equipment if there is nobody watching as client devices could signal the other devices in the home about this. Further, the infrared detector can be used in absence of the viewer as an intruder alert system, if the client device is informed (e.g. via the menu) that the viewer is going to be away for a while. The client device can send a signal to the central office or to the internal network, from which e.g. a text message can be sent to the viewer's phone.

Persons skilled in the art will understand that the architecture described in Figures 1 and 2 in no way limits the scope of the present invention and that the techniques taught herein may be implemented on any properly configured processing unit without departing the scope of the present invention.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

One embodiment of the present invention involves monitoring a series of user inputs to the client device and determining an input time when the user provides a last user input of the series of user inputs. When the client device detects the last user input, either directly or indirectly, the method further comprises the step of assigning an initial value to the chance associated with the input time. The method also comprises the step of, based on the initial value, determining the chance that a user is present at the current time using a time dependent function.

One embodiment of the present invention involves a system comprising a detector configured for detecting a series of user inputs to the client device, a determination module configured for determining an input time when the user provides a last user input of the series of user inputs in response to detecting the last user input, and an assignor configured for assigning an initial value to the chance at the input time. The detector, the determination module, and the assignor may be implemented in hardware, in software, or as a hybrid solution having both the hardware and the software components. The system also comprises a memory configured for storing a time dependent function and a processor configured for determining, based on the initial value, the chance that the user is present at the current time using the time dependent function.

While the forgoing is directed to embodiments of the present invention, other and further embodiments of the invention may be devised without departing from the basic scope thereof. For example, aspects of the present invention may be implemented in hardware or software or in a combination of hardware and software. Therefore, the scope of the present invention is determined by the claims that follow.

## Claims

1. A method for determining a chance that a user is present at a current time while a client device is tuned to a channel, comprising:
monitoring a series of user inputs to the client device;
determining an input time when the user provides a user input to the client device;
when the client device detects the user input, assigning an initial value to the chance at the input time; and
based on the initial value, determining the chance that a user is present at the current time using a time dependent function, wherein the current time is later than the input time.

2. The method according to claim 1, further comprising determining whether the chance satisfies a threshold condition.

3. The method according to claim 2, further comprising:
establishing that the user is present while the client device is tuned to the channel when the chance is determined to satisfy the threshold condition, and
establishing that the user is not present while the client device is tuned to the channel when the chance is determined to not satisfy the threshold condition.

4. The method according to claim 2, further comprising the step of triggering the user to provide the user input when the chance is determined to not satisfy the threshold condition.

5. The method according to claim 4, further comprising disabling triggering the user to provide the user input when the user is recording a media segment received via the channel.

6. The method according to claim 5, wherein the disabling comprises marking the media segment with a mark indicating that the media segment is being recorded.

7. The method according to claims 2-6, wherein the threshold condition comprises the chance being greater than a threshold value.

8. The method according to claim 7, wherein the threshold value is predetermined in the client device or provided via the channel.

9. The method according to claims 2-8, wherein the steps of determining the chance and determining whether the chance satisfies the threshold condition are performed at predetermined time intervals or continuously.

10. The method according to claims 1-9, wherein the chance is determined further based on one or more of a length of the media segment, a content of the media segment, and statistical data related to the chance.

11. The method according to claims 1-10, wherein the user input comprises the user triggering an external device connected to the client device.

12. The method according to claims 1-10, further comprising transmitting the chance or a derivative thereof to a central office.

13. The method according to claims 1-10, wherein:
the chance ranges between a minimum value and a maximum value,
the initial value is the minimum value when the user input comprises turning the client device off, and
the initial value is the maximum value when the user input does not comprise turning the client device off.

14. A computer program comprising software code portions configured for, when executed in a client device, for performing the steps of the method as defined in one or more of the claims 1-13.

15. A system configured for determining a chance that a user is present at a current time while a client device is tuned to a channel, said system comprising:
a detector configured for detecting a user input to the client device;
a determination module configured for determining an input time when the user provides the user input;
an assignor configured for assigning an initial value to the chance at the input time;
a memory configured for storing a time dependent function; and
a processor configured for determining, based on the initial value, the chance that the user is present at the current time using the time dependent function, wherein the current time is not later than the input time.
